Europäisches Patentamt

European Patent Office

Office européen des brevets

(11) Veröffentlichungsnummer: **0 246 535**
**A1**

(12) **EUROPÄISCHE PATENTANMELDUNG**

(21) Anmeldenummer: **87106842.5**

(22) Anmeldetag: **12.05.87**

(51) Int. Cl.⁴: **B29B 7/76**

(30) Priorität: **23.05.86 DE 3617287**

(43) Veröffentlichungstag der Anmeldung:
**25.11.87 Patentblatt 87/48**

(84) Benannte Vertragsstaaten:
**DE FR GB IT**

(71) Anmelder: **MASCHINENFABRIK HENNECKE GMBH**
**Postfach 1180**
**D-5205 St. Augustin 1(DE)**

(72) Erfinder: **Proksa, Ferdinand, Dr.**
**Am Arenzberg 9**
**D-5090 Leverkusen 3(DE)**
Erfinder: **Sulzbach, Hans-Michael**
**Hermann-Löns-Strasse 12**
**D-5330 Königswinter 51(DE)**
Erfinder: **Raffel, Reiner, Dipl.-Ing.**
**Müschbungert 2**
**D-5200 Siegburg(DE)**
Erfinder: **Althausen, Ferdinand**
**Wiescheider Strasse 16**
**D-5206 Neunkirchen 1(DE)**

(74) Vertreter: **Müller, Heinz-Gerd, Dipl.-Ing.**
**BAYER AG Konzernverwaltung RP**
**Patentabteilung**
**D-5090 Leverkusen 1, Bayerwerk(DE)**

(54) Vorrichtung zum Erzeugen eines vorzugsweise chemisch reaktionsfähigen Gemisches aus mindenstens zwei Kunststoffkomponenten.

(57) Um bei Vorrichtungen zum Erzeugen eines vorzugsweise chemisch reaktionsfähigen Gemisches aus mindestens zwei Kunststoffkomponenten, bestehend aus einer Mischkammer (13) mit Steuerorgan (3), sicherzustellen, daß die Eintrittsöffnungen (4, 5) nur in die Mischkammer (13) oder nur über die Überströmkanäle (10, 11) in die Rücklaufleitungen (8, 9) dosieren, wird der Abstand s der zwischen der Stirnfläche (15) und der Mantelfläche (16) des Steuerorgans (3) gebildeten Steuerkante (14) und den als Steuerkanten dienenden Kantenabschnitten der Überströmkanäle (10, 11), welche bei der Hubbewegung des Steuerorgans (3) die Eintrittsöffnungen (4, 5) überstreichen entsprechend der Höhe h der Eintrittsöffnungen (4, 5) in Hubrichtung des Steuerorgans (3) zusätzlich eines Betrages Δh gestaltet.

FIG. 3

# Vorrichtung zum Erzeugen eines vorzugsweise chemisch reaktionsfähigen Gemisches aus mindestens zwei Kunststoffkomponenten

Die Erfindung richtet sich auf eine Vorrichtung zum Erzeugen eines vorzugsweise chemisch reaktionsfähigen Gemisches aus mindestens zwei Kunststoffkomponenten mit einer Mischkammer, die Eintrittsöffnungen für die einzelnen Kunststoffkomponenten und eine Austrittsöffnung für das Kunststoffkomponentengemisch besitzt, sowie mit einem in der Mischkammer angeordneten Steuerorgan, das aus einer die Eintrittsöffnungen offenlassenden Stellung bis in den Bereich der Austrittsöffnung, dabei die Eintrittsöffnungen gegenüber der Mischkammer absperrend, hin und her bewegbar ist, wobei am Steuerorgan Überströmkanäle vorgesehen sind, durch die die Eintrittsöffnungen anstelle mit der Mischkammer mit Rückführleitungen verbindbar sind, wobei die zwischen der Stirnfläche des Steuerorgans und dessen Mantelfläche gebildete Kante eine Steuerkante darstellt, und die dieser Steuerkante nächstgelegenen, bei der Hubbewegung des Steuerorgans die Eintrittsöffnungen überstreichenden Kantenabschnitte der Überströmkanäle ebenfalls Steuerkanten darstellen.

Bei der bekannten Vorrichtung (DE-PS 20 07 935 entsprechend US-PS 3 706 515) der eingangs genannten Art wird gelehrt, daß durch die am Steuerorgan vorgesehenen Überströmkanäle die Eintrittsöffnungen zeitsynchron mit ihrem Abschluß von der Mischkammer mit Rückführleitungen verbindbar sind. D.h., zum gleichen Zeitpunkt, wie die Eintrittsöffnungen durch das Steuerorgan zur Mischkammer hin verschlossen werden, werden diese Eintrittsöffnungen zu den Überströmkanälen hin geöffnet, so daß während nur eines einzigen Augenblickes die zudosierten Komponenten weder in die Mischkammer noch über die Überströmkanäle in die Rückführleitungen strömen. Theoretisch ist dies ein ideal ablaufender Vorgang, welcher für ein exaktes Dosierverhältnis bürgen sollte. Jedoch kleinste Fertigungsabweichungen und geringster Verschleiß der Steuerkanten des Steuerorgans bewirken eine "gespaltene Förderung", d.h. es wird gleichzeitig in die Mischkammer und in den Rücklauf gefördert. Dadurch treten Dosierungsgenauigkeiten auf.

Es besteht somit die Aufgabe, die vorbekannte Vorrichtung dahingehend zu verbessern, daß während des Umschaltens eindeutig entweder nur in die Mischkammer oder nur in die Rücklaufleitungen gefördert wird, um unkontrollierbare Veränderungen des Mischungsverhältnisses mit allen Nachteilen für das aus dem Reaktionsgemisch herzustellende Fertigteil zu vermeiden.

Gelöst wird diese Aufgabe dadurch, daß der Abstand s der Steuerkanten der Überströmkanäle von der zwischen Stirnfläche und Mantelfläche gebildeten Steuerkante um $\Delta h$ größer ist als die Höhe h der Eintrittsöffnungen in Hubrichtung des Steuerorgans.

Es wird dadurch erreicht, daß zu Beginn des Mischvorganges die Eintrittsöffnungen erst in die Mischkammer öffnen, nachdem die Überströmkanäle dem Bereich der Eintrittsöffnungen entzogen sind. Beim Ausstoßhub des Steuerorgans ist es umgekehrt, indem die Eintrittsöffnungen zuerst völlig von der Mischkammer abgetrennt werden und erst nach einer Weiterbewegung des Steuerorgans um die Strecke $\Delta h$ mit den Überströmkanälen verbunden werden. Durch diesen zeitweisen Verschluß der Eintrittsöffnungen wird eine gespaltene Förderung eindeutig vermieden. Druckspitzen im Zuleitungssystem der Komponenten können durch extrem kurze Schaltzeiten minimiert werden.

$\Delta h$ ist abhängig von der Größe und Gestaltung der Mischkammer sowie von den gewählten Fertigungstoleranzen. Der Wert sollte mindestens 0,4 mm betragen. Die zu wählende Größe für $\Delta h$ hängt auch von der vorgegebenen Höhe h der Eintrittsöffnungen ab. Der Wert $\Delta h$ ist einerseits so groß zu wählen, daß mit Sicherheit auch bei begonnenem Verschleiß der Steuerkanten beim Umschalten ein kurzzeitig totaler Verschluß der Einspritzöffnungen stattfindet, aber andererseits durch entsprechende Hubgeschwindigkeit bzw. Beschleunigung des Steuerorgans die Verschlußzeit so gering ist, daß keine unzulässigen Druckspitzen entstehen.

Nach einer besonderen Ausführungsform ist die Höhe h der einzelnen Eintrittsöffnungen unterschiedlich.

Von dieser Maßnahme wird insbesondere dann Gebrauch gemacht, wenn die Komponenten in unterschiedlichen Mengen bzw. mit unterschiedlichen Drücken eingedüst werden sollen.

Nach einer weiteren Ausführungsform sind die Eintrittsöffnungen in Längsrichtung der Mischkammer zueinander versetz angeordnet.

Von dieser Maßnahme läßt sich insbesondere dann Gebrauch machen, wenn gemäß der vorerwähnten Variante die Höhe h der einzelnen Eintrittsöffnungen unterschiedlich ist. In diesem speziellen Falle sind nämlich die Eintrittsöffnungen im Bezug auf die Austrittsöffnung der Mischkammer vorzugsweise so angeordnet, daß ihre tiefsten Punkte gleichen Abstand von der Austrittsöffnung aufweisen.

Nach einer weiteren Ausführungsform sind die Steuerkanten der Überströmkanäle in Längsrichtung des Steuerorgans zueinander versetzt angeordnet.

Diese Ausführungsform wird insbesondere im Zusammenhang mit versetzten Eintrittsöffnungen benutzt, wobei durch Versetzung der Steuerkanten der Überströmkanäle beiden Überströmkanälen eine Strecke mit vorzugsweise gleichem Δh zugeordnet wird.

Bei sehr kleinen Eintrittsöffnungen darf die Strecke h + Δh, welche auch die Dichtstrecke darstellt, nicht zu klein sein. Andererseits darf aber die Überdeckung Δh nicht zu groß sein, um Druckspitzen zu vermeiden.

Deshalb ist für einen solchen Fall mindestens eine der Eintrittsöffnungen durch eine Steuernut in Längsrichtung der Längsbohrung erweitert.

In diesem Falle ist unter der Höhe h die eigentliche Höhe der Eintrittsöffnung zuzüglich der Höhe der anschließenden Steuernut zu verstehen.

Gemäß einer weiteren Ausführungsform der Vorrichtung weisen die Achsen der Eintrittsöffnungen entgegen der Ausstoßrichtung des Steuerorgans und schließen zwischen sich einen Winkel α im Bereich von 50 bis 150° ein.

Durch diese Maßnahme wird eine besonders gute Vermischung auch zu Beginn und Ende des Mischvorganges erzielt.

Vorzugsweise ist die für die Länge der Mischkammer verantwortliche hintere Totpunktlage des Steuerorgans einstellbar. Dadurch läßt sich diese Totpunktlage so einstellen, daß beim Ausstoßhub des Steuerorgans beim Erreichen der Eintrittsöffnungen die maximale Hubgeschwindigkeit bereits wenigstens annähernd erreicht ist, so daß die eigentliche Umsteuerphase sehr kurz ist.

Durch die Kombination einiger oder aller aufgeführten besonderen Ausführungsformen läßt sich die Vorrichtung in ihrer Wirkungsweise optimieren.

In der Zeichnung ist die neue Vorrichtung in verschiedenen Ausführungsbeispielen in vergrößertem und der Deutlichkeit halber in verzerrtem Maßstab rein schematisch dargestellt und nachstehend näher erläutert. Es zeigen:

Fig. 1 eine erste Ausführungsform der Vorrichtung mit dem Steuerorgan in Ausstoßstellung,

Fig. 2 die Vorrichtung gemäß Figur 1 mit dem Steuerorgan in Stellung unmittelbar vor Unterbrechung der Verbindung der Eintrittsöffnungen mit den Rücklaufleitungen über die Überströmkanäle. Diese Stellung entspricht beim Ausstoßhub in umgekehrter Weise der soeben vollzogenen Verbindung der Zuführungskanäle mit den Rücklaufleitungen über die Überströmkanäle,

Fig. 3 die Vorrichtung gemäß Figur 1 unmittelbar vor der Freigabe der Eintrittsöffnungen in die Mischkammer. Diese Stellung entspricht beim Ausstoßhub dem Abschließen der Eintrittsöffnungen von der Mischkammer bevor die Verbindung über die Überströmkanäle mit den Rücklaufkanälen stattfindet,

Fig. 4 die Vorrichtung gemäß Figur 1 mit zur Mischkammer völlig freigegebenen Eintrittsöffnungen. Es handelt sich um die Endstellung des Steuerorgans. Diese Stellung entspricht der Ausgangsposition für den Ausstoßhub,

Fig. 5 eine zweite Ausführungsform der Vorrichtung mit vom Steuerorgan verschlossenen Eintrittsöffnungen,

Fig. 6 die Vorrichtung gemäß Figur 5 mit zur Mischkammer teilweise geöffneten Eintrittsöffnungen,

Fig. 7 eine dritte Ausführungsform der Vorrichtung mit vom Steuerorgan verschlossenen Eintrittsöffnungen,

Fig. 8 die Vorrichtung gemäß Figur 7 mit zur Mischkammer teilweise geöffneten Eintrittsöffnungen.

Fig. 9 eine vierte Ausführungsform der Vorrichtung mit vom Steuerorgan verschlossenen Eintrittsöffnungen und

Fig. 10 die Vorrichtung gemäß Fig. 9 mit zur Mischkammer teilweise geöffneten Eintrittsöffnungen.

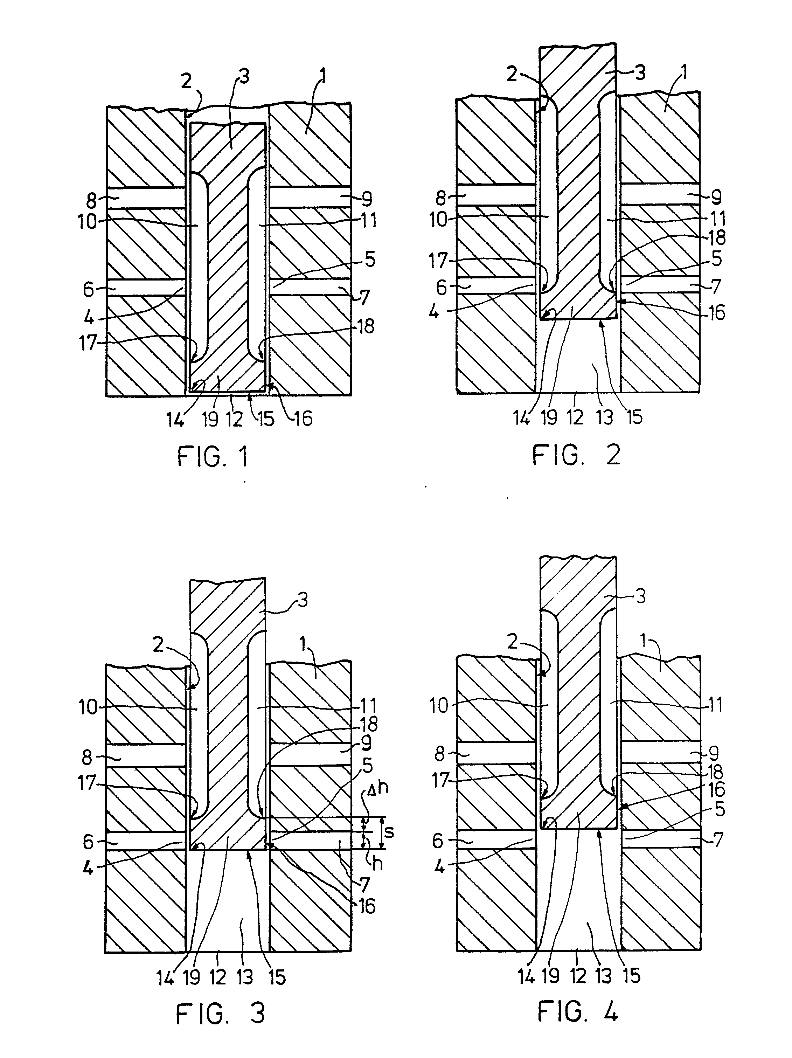

In Figur 1 bis 4 besteht die Vorrichtung aus einem angedeuteten Mischkopfgehäuse 1, welches eine Längsbohrung 2 enthält. Diese dient einem als verschiebbaren Kolben ausgebildeten Steuerorgan 3 als Führung. In die Längsbohrung 2 münden über Eintrittsöffnungen 4, 5 Zuführungskanäle 6, 7 und es führen Rücklaufkanäle 8, 9 ab. Das Steuerorgan 3 ist mit Überströmkanälen 10, 11 versehen, mit welchen bei entsprechender Stellung des Steuerorgans 3 die Eintrittsöffnungen 4, 5 mit den Rücklaufkanälen 8, 9 verbindbar sind. Das Steuerorgan 3 ist zwischen zwei Endstellungen bewegbar. In der einen Endstellung füllt das Steuerorgan 3 die gesamte Längsbohrung 2 bis zur Austrittsöffnung 12 aus. In der anderen Endstellung gibt es die Eintrittsöffnungen 4, 5 frei und der von dem Steuerorgan 3 freigegebene Teil der Längsbohrung 2 bildet eine Mischkammer 13. Als Steuerkante 14 dient die zwischen der Stirnfläche 15 des Steuerorgans 3 und seiner Mantelfläche 16 gebildete Kante. Weitere Steuerkanten 17, 18 sind die dieser Steuerkante 14 nächstgelegenen, bei der Hubbewegung des Steuerorgans 3 die Eintrittsöffnungen 4, 5 überstreichenden Kantenabschnitte der Überströmkanäle 10, 11. Der Abstand der Steuerkanten 17 bzw. 18 von der Steuerkante 14 beträgt s = 7,0 mm. Die Höhe der Eintrittsöffnungen 4, 5 - sie sind hier kreisförmig gestaltet - beträgt h = 6,0 mm. Um sicherzustellen, daß bei einem Überfahren der Eintrittsöffnungen 4, 5 mittels des Kopfes 19 des Steuerorgans 3 ein kurzer Moment vorhanden ist, in welchem die Eintrittsöffnungen 4, 5 sowohl gegen die Mischkammer 13 als auch gegen die Überströmkanäle 10, 11 abgeschlossen sind, ist eine zusätzliche Höhe $\Delta h = 1,0$ mm vorgesehen, so daß $s = h + \Delta h = 7,0$ mm beträgt (in Figur 1 bis 4 verzerrter Maßstab). Es versteht sich von selbst, daß die Überströmkanäle 4, 5 so lang sein müssen, daß sie in der endgültigen Ausstoßstellung des Steuerorgans 3, in welcher das Steuerorgan 3 die Längsbohrung 2 völlig ausfüllt, immer noch das Überströmen der Komponenten von den Eintrittsöffnungen 4, 5 zu den Rücklaufkanälen 8, 9 ermöglichen.

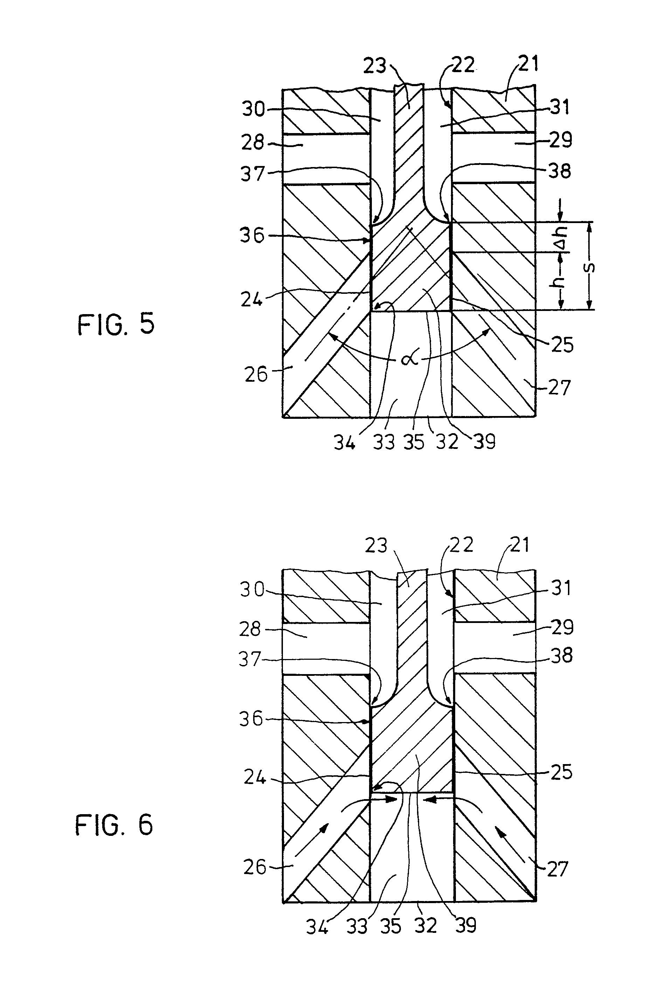

In Figur 5, 6 besteht die Vorrichtung aus einem angedeuteten Mischkopfgehäuse 21, welches eine Längsbohrung 22 enthält. Diese dient einem als verschiebbaren Kolben ausge bildeten Steuerorgan 23 als Führung. In die Längsbohrung 22 münden über Eintrittsöffnungen 24, 25 Zuführungskanäle 26, 27, welche schräg entgegen der Ausstoßrichtung des Steuerorgans 23 zwischen sich einen Winkel $\alpha$ von 60° einschließen. Von der Längsbohrung 22 führen Rücklaufkanäle 28, 29 ab. Das Steuerorgan 23 ist mit Überströmkanälen 30, 31 versehen, mit welchen bei entsprechender Stellung des Steuerorgans 23 durch dessen Kopf 39 die Eintrittsöffnungen 24, 25 völlig verschlossen sind (Figur 5). Das Steuerorgan 23 ist zwischen einer die Längsbohrung 22 völlig ausfüllenden, bis an die Austrittsöffnung 32 reichenden, und einer in der Längsbohrung 22 die Mischkammer 33 bildenden, und damit die Eintrittsöffnungen 24, 25 freigebenden Stellung hin und her bewegbar. Eine Steuerkante 34 ist zwischen der Stirnfläche 35 des Steuerorgans 23 und dessen Mantelfläche 36 gebildet. Weitere Steuerkanten 37, 38 stellen die der Steuerkante 34 am nächsten gelegenen Kantenabschnitte der Überströmkanäle 30, 31 dar. In Figur 6 befindet sich das Steuerorgan 21 gerade in einer Stellung, in welcher die Eintrittsöffnungen 24, 25 soeben teilweise freigegeben worden sind, so daß die einspritzenden Komponenten tangential entlang der Stirnfläche 35 strömen und aufeinandertreffen. Bei dieser Anordnung gelangen keine Spritzer aus der Mischkammer 33, wodurch sowohl in der Anfangsphase als auch gegen Schußende einwandfreie Vermischung gewährleistet ist. Bezüglich der Größen s, h und $\Delta h$ wird auf die Ausführungsform gemäß Figur 1 bis 4 verwiesen.

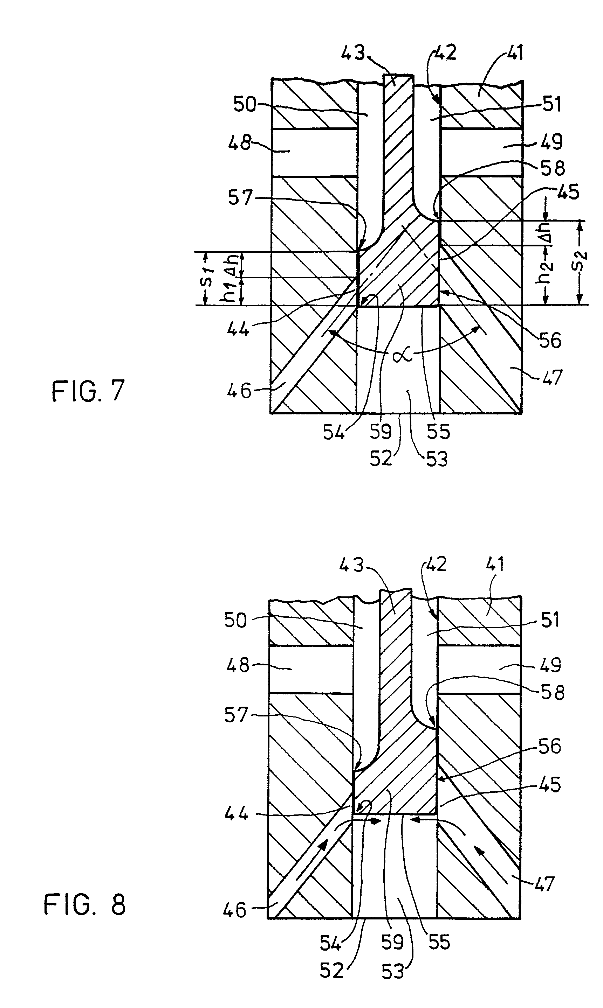

In Figur 7, 8 besteht die Vorrichtung aus einem angedeuteten Mischkopfgehäuse 41, welches eine Längsbohrung 42 enthält. Diese dient einem als verschiebbaren Kolben ausge bildeten Steuerorgan 43 als Führung. In die Längsbohrung 42 münden über Eintrittsöffnungen 44, 45 Zuführungskanäle 46, 47, welche schräg entgegen der Ausstoßrichtung des Steuerorgans 43 unter einem Winkel $\alpha$ von 60° zueinander geneigt sind. Die Eintrittsöffnungen 44, 45 besitzen in Richtung der Längsbohrung 42 eine unterschiedliche Höhe h. Die Eintrittsöffnung 44 weist die Höhe $h_1 = 5,0$ mm auf und die Eintrittsöffnung 45 die Höhe $h_2 = 7,0$ mm. Dabei besitzen die zur Austrittsöffnung 52 hin gelegenen Stellen der Eintrittsöffnungen 44, 45 zur Austrittsöffnung 52 gleichen Abstand. Von der Längsbohrung 42 führen Rücklaufleitungen 48, 49 ab, welche über im Steuerorgan 43 angeordnete Überströmkanäle 50, 51 verbindbar sind. In zurückgefahrener Stellung des Steuerorgans 43 sind die Eintrittsöffnungen 44, 45 freigegeben und der freigegebene Teil der Längsbohrung 42 dient als Mischkammer 53. Eine Steuerkante 54 wird durch die Kante zwischen Stirnfläche 55 und Mantelfläche 56 des Steuerorgans 43 gebildet. Weitere Steuerkanten 57 bzw. 58 stellen die der Steuerkante 54 am nächsten gelegenen Kantenabschnitte der Überströmkanäle 50, 51 dar. Der Abstand $s_1$ zwischen Steuerkante 54 und Steuerkante 57 beträgt $h_1 + \Delta h = 6,0$ mm, wobei $h_1 = 5,0$ mm und $\Delta h = 1,0$ mm betragen. Der Abstand $s_2$ zwischen Steuerkante 54 und Steuerkante 58 beträgt $h_2 + \Delta h = 8,0$ mm, wobei $h_2 = 7,0$ mm und $\Delta h = 1,0$ mm betragen. Auch bei dieser Ausführungsform treten sowohl bei Schußbeginn als auch bei Schußende keine Spritzer aus der Mischkammer 53 aus, so daß die Mischqualität nicht beeinträchtigt wird. In Figur 7 ist der Moment der Position des Steuerorgans 43 dargestellt bevor die Eintrittsöffnungen 44, 45 freigegeben werden. Sie sind also gerade noch völlig abgeschlossen. In Figür 8 ist die soeben beginnende Freigabe der Eintrittsöffnungen 44, 45 festgehalten.

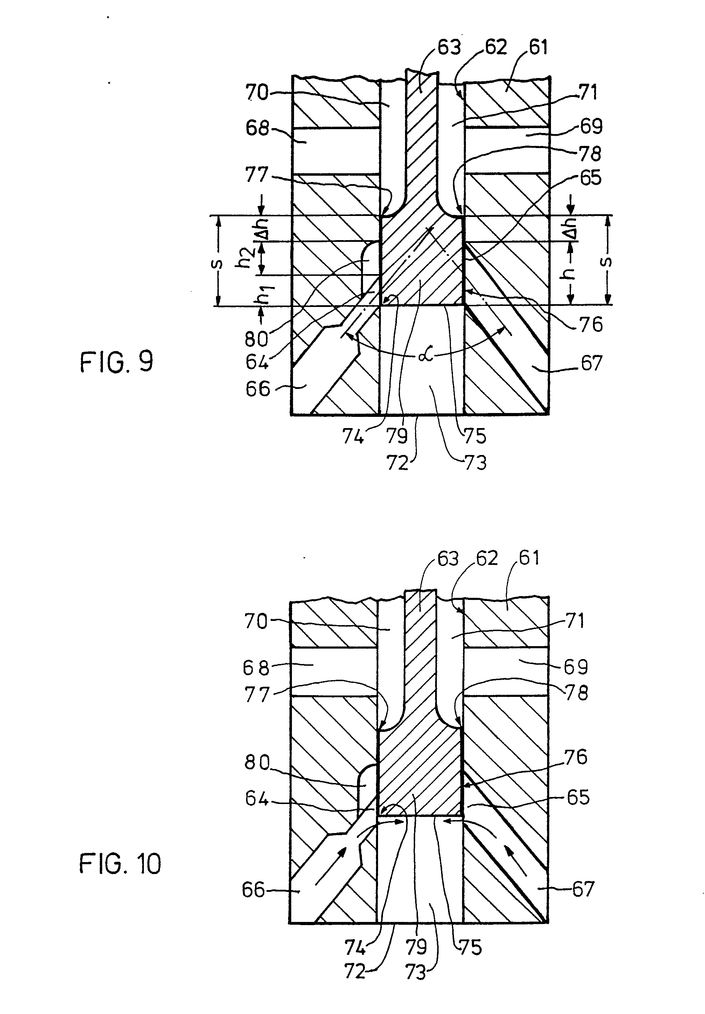

In Fig. 9, 10 besteht die Vorrichtung aus einem angedeuteten Mischkopfgehäuse 61, welches eine Längsbohrung 62 enthält. Diese dient einem als verschiebbaren Kolben ausgebildeten Steuerorgan 63 als Führung. In die Längsbohrung 62 münden über Entrittsöffnungen 64, 65 Zuführungskanälöe 66, 67, welche schräg entgegen der Ausstoßrichtung des Steuerorgans 63 unter einem Winkel $\alpha$ von 60° zueinander geneigt sind. Die Eintrittsöffnungen 64, 65 besitzen unterschiedlichen Querschnitt. Der Eintrittsöffnung 64 ist zusätzlich eine Steuernut 80 zugeordnet. Die Eintrittsöffnung 64 hat die Höhe $h_1 = 4,0$ mm. Die Steuernut 80 hat die Höhe $h_2 = 2,0$ mm. Die Gesamthöhe h beträgt also 6,0 mm. Die Überdeckung $\Delta h$ beträgt 1,0 mm. Damit ergibt sich für $s = h + \Delta h = 7,0$ mm. Die Eintrittsöffnung 65 weist die Höhe $h = 6,0$ mm auf. $\Delta h$ beträgt wiederum 1,0 mm. Damit ist auch auf dieser Seite $s = h + \Delta h = 7,0$ mm.

Es ist selbstverständlich, daß beide Seiten mit einer Steuernut 80 versehen sein können, wobei die Strecken s und die Überdeckungen $\Delta h$ vorzugsweise jeweils gleich groß sind.

Um Druckspitzen zu minimieren, ist mittels eines verstellbaren Anschlages (nicht dargestellt) die für die Länge der Mischkammer 73 verantwortliche obere Totpunktlage des Steuerorgans 63 einstellbar.

Diese Stellung ist optimal einjustiert, wenn entsprechend den hydraulischen Gegebenheiten, wie Speichervolumen, Leitungslängen zwischen Schaltventil und Mischkopf usw. beim Ausstoßvorgang das Steuerorgan 63 bereits vor dem Überfahren der Eintrittsöffnungen 64, 65 so stark beschleunigt ist, daß die maximale Geschwindigkeit zumindest annähernd erreicht ist. D.h. also, daß bei gebildeter Mischkammer 73 die Entfernung der Stirnfläche 75 von der Eintrittsöffnung 65 einem solchen Abstand entspricht, welcher dem benötigten Beschleunigungsweg entspricht. Beim Einleiten des Mischvorganges besitzt das Steuerorgan 63 bereits die maximale Geschwindigkeit, weil der Kopf 79 des Steuerkolbens von der Austrittsöffnung 72 her bereits einen längeren Weg zurückgelegt hat.

**Ansprüche**

1. Vorrichtung zum Erzeugen eines vorzugsweise chemisch reaktionsfähigen Gemisches aus mindestens zwei Kunststoffkomponenten mit einer Mischkammer (13; 33; 53; 63), die Eintrittsöffnungen (4, 5; 24, 25; 44, 45; 64, 65) für die einzelnen Kunststoffkomponenten und eine Austrittsöffnung (12; 32; 52; 72) für das Kunststoffkomponentengemisch besitzt, sowie mit einem in der Mischkammer (13; 33; 53; 73) angeordneten Steuerorgan (3; 23; 43; 63), das aus einer die Eintrittsöffnungen (4, 5; 24, 25; 44, 45; 64, 65) offenlassenden Stellung bis in den Bereich der Austrittsöffnung (12; 32; 52; 72), dabei die Eintrittsöffnungen (4, 5; 24, 25; 44, 45; 64, 65) gegenüber der Mischkammer (13; 33; 53; 73) absperrend, hin und her bewegbar ist, wobei am Steuerorgan (3; 23; 43; 63) Überströmkanäle (10, 11; 30, 31; 50, 51; 70, 71) vorgesehen sind, durch die die Eintrittsöffnungen (4, 5; 24, 25; 44, 45; 64, 65) anstelle mit der Mischkammer (13; 33; 53; 73) mit Rückführleitungen (8, 9; 18, 19; 48, 49; 68, 69) verbindbar sind, wobei die zwischen der Stirnfläche (15; 35; 55; 75) des Steuerorgans (3; 23; 43; 63) und dessen Mantelfläche (16; 36; 56; 76) gebildete Kante eine Steuerkante (14; 34; 54; 74) darstellt, und die dieser Steuerkante (14; 34; 54; 74) nächstgelegenen, bei der Hubbewegung des Steuerorgans (3; 23; 43; 63) die Eintrittsöffnungen (4, 5; 24, 25; 44, 45; 64, 65) überstreichenden Kantenabschnitte der Überströmkanäle (10, 11; 30, 31; 50, 51; 70, 71) ebenfalls Steuerkanten (17, 18; 37, 38; 57, 58; 77, 78) darstellen, dadurch gekennzeichnet, daß der Abstand s der Steuerkanten (17, 18; 37, 38; 57, 58; 77, 78) der Überströmkanäle (10, 11; 30, 31; 50, 51; 70, 71) von der zwischen Stirnfläche (15; 35; 55; 75) und Mantelfläche (16; 36; 56; 76) gebildeten Steuerkante (14; 34; 54; 74) um Δh größer ist als die Höhe h der Einspritzöffnungen (4, 5; 24, 25; 44, 45; 64, 80; 65) in Hubrichtung des Steuerorgans (3; 23; 43; 63).

2. Vorrichtung nach Anspruch 1, dadurch gekennzeichnet, daß Δh mindestens 0,4 mm beträgt.

3. Vorrichtung nach Anspruch 1 oder 2, dadurch gekennzeichnet, daß die Höhe h der einzelnen Eintrittsöffnungen (44; 45) unterschiedlich ist.

4. Vorrichtung nach einem der Ansprüche 1 bis 3, dadurch gekennzeichnet, daß die Eintrittsöffnungen (44; 45) in Längsrichtung der Mischkammer (53) zueinander versetzt angeordnet sind.

5. Vorrichtung nach einem der Ansprüche 1 bis 4, dadurch gekennzeichnet, daß die Steuerkanten (57; 58) der Überströmkanäle (30; 50) in Längsrichtung des Steuerorgans (43) zueinander versetzt angeordnet sind.

6. Vorrichtung nach einem der Ansprüche 1 bis 5, dadurch gekennzeichnet, daß die Achsen der Eintrittsöffnungen (24, 25; 44, 45; 64, 65) entgegen der Ausstoßrichtung des Steuerorgans (23; 43; 63) weisen und zwischen sich einen Winkel α im Bereich von 50 bis 150° einschließen.

7. Vorrichtung nach einem der Ansprüche 1 bis 6, dadurch gekennzeichnet, daß die für die Länge der Mischkammer (13; 33; 53; 73) verantwortliche obere Endlage des Steuerorgans (3; 23; 43; 63) einstellbar ist.

8. Vorrichtung nach einem der Ansprüche 1 bis 7, dadurch gekennzeichnet, daß mindestens eine der Eintrittsöffnungen (64) in Längsrichtung der Längsbohrung (62) durch eine Steuernut (80) erweitert ist.

FIG. 1

FIG. 2

FIG. 3

FIG. 4

HF 79

FIG. 5

FIG. 6

FIG. 7

FIG. 8

FIG. 9

FIG. 10

## EINSCHLÄGIGE DOKUMENTE

EP 87106842.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 226 543 (SCHLÜTER)<br>* Fig. 1,3 *<br>-- | 1,2 | B 29 B 7/76 |
| X | GB - A - 1 490 500 (ELASTOGRAN)<br>* Fig. 1 *<br>-- | 1,2 | |
| X | FR - A - 2 222 189 (KRAUSS-MAFFEI)<br>* Fig. 1 *<br>-- | 1,2 | |
| A | DE - A1 - 3 242 278 (BASF)<br>* Fig. 1,2 *<br>-- | 1,3,4,8 | |
| A | DE - B - 2 145 547 (CLASEN)<br>* Fig. 1,2 *<br>---- | 6 | |

RECHERCHIERTE SACHGEBIETE (Int. Cl.4)

B 29 B

Der vorliegende Recherchenbericht wurde für alle Patentansprüche erstellt.

| Recherchenort | Abschlußdatum der Recherche | Prüfer |
|---|---|---|
| WIEN | 05-08-1987 | MAYER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82